# FASCICULE DE BREVET EUROPEEN

(11) **EP 1 827 816 B1**
(45) Date de publication et mention de la délivrance du brevet: **09.07.2014**
(21) Numéro de dépôt: 05824046.6
(22) Date de dépôt: 05.12.2005
(51) Int. Cl.: B32B 7/02, B32B 27/36, A45D 40/00, B65D 75/48

(54) **FILM COMPLEXE ET DISTRIBUTEUR DE PRODUIT FLUIDE COMPRENANT UN TEL FILM**
MEHRLAGIGE FOLIE UND SOLCH EINE FOLIE UMFASSENDER FLUIDPRODUKTSPENDER
MULTI-LAYER FILM AND FLUID PRODUCT DISPENSER COMPRISING ONE SUCH FILM

(30) Priorité: 07.12.2004 FR 0452882
(43) Date de publication de la demande: 05.09.2007
(73) Titulaire: Aptar France SAS, 27110 Le Neubourg (FR)
(72) Inventeur: DUQUET, Frédéric, F-27800 Thibouville (FR); PENNANEAC'H, Hervé, Piseux F-27130 Verneuil Sur Avre (FR)
(74) Mandataire: CAPRI
(86) Numéro de dépôt international: PCT/FR2005/051034
(87) Numéro de publication internationale: WO 2006/061534

(56) Documents cités:
- EP-A- 0 143 567
- EP-A- 0 263 698
- EP-A- 0 695 625
- EP-A- 1 234 521
- DATABASE WPI Section Ch, Week 199906 Derwent Publications Ltd., London, GB; Class F05, AN 1999-064263 XP002338015 & JP 10 309898 A (KASHIHARA K) 24 novembre 1998 (1998-11-24)

## Description

La présente invention concerne un film complexe définissant un côté avant et un côté arrière et comprenant plusieurs couches superposées. La présente invention concerne également un distributeur de produit fluide utilisant un tel film complexe notamment en tant qu'opercule pour réaliser un réservoir de produit fluide ensemble avec un autre élément comme par exemple une coque profilée. Ainsi, le film complexe de l'invention qui est utilisé en tant qu'opercule, peut également être utilisé dans d'autres applications comme par exemple l'emballage ou l'étiquetage. Un tel film complexe peut être utilisé dans de nombreux domaines techniques, et notamment les domaines de la parfumerie, de la cosmétique ou encore de la pharmacie.

De nombreux films complexes multicouches existent depuis longtemps sur le marché. Certains films complexes sont transparents, et d'autres sont totalement opaques. Dans ce dernier cas, on peut par exemple utiliser une couche barrière pour empêcher le passage de la lumière. L'aluminium est un matériau fréquemment utilisé pour la couche barrière. D'autres types de couche barrière pour faire écran au passage d'autres éléments ou rayonnements peuvent également être utilisés, comme par exemple le SiOx. Certains films complexes sont destinés à venir en contact direct d'un produit, de préférence fluide, à savoir liquide ou pulvérulent. Les matériaux solides ne sont toutefois pas exclus. Le film complexe doit alors être le plus neutre et inerte possible en présence du produit. En général, ce type de film complexe comprend au moins une couche barrière et plusieurs couches plastiques. D'autre part, on connaît également des films complexes utilisés en tant qu'étiquettes destinées à être apposées sur un article. Ces étiquettes servent à l'apposition d'indications de toutes natures, à savoir écrites ou figurées. Ces étiquettes peuvent également présenter un élément de décor destiné à améliorer l'esthétique de l'article. Le décor ou les inscriptions lisibles sont en générale réalisé(es) par une couche d'impression appliquée sur une autre couche, qui est souvent désignée sous le terme d'aplat. Lorsqu'il s'agit d'une étiquette, la couche d'impression est la couche la plus externe qui est en contact avec l'air ambiant. De manière générale, cette couche d'impression peut être désignée sous le terme de couche de décor, bien qu'elle puisse comprendre des indications écrites.

Ce type d'étiquette n'est pas adapté à être utilisé en tant qu'opercule destiné à venir en contact direct avec un produit notamment fluide. En effet, la couche de décor utilise des matériaux d'impression, comme de l'encre, qui ne sont pas compatibles avec certains produits, et notamment les parfums. Par conséquent, il n'est pas possible d'utiliser de telles étiquettes en tant qu'opercule pour compléter ou former un réservoir de parfum.

EP-A-1234521 décrit un emballage pour la réalisation d'échantillons cosmétiques destinés à être attachés dans des magazines, sous forme de récipient distributeur de compositions liquides ou semi liquides. Le dit récipient comprend deux structures multicouches ou plus, chaque structure comprenant une première feuille multicouche dite de fond, qui sera attachée sur la feuille de papier, et une seconde feuille multicouche de recouvrement, ou feuille avant, ces deux feuilles étant soudées ensemble sur leur périphérie. La feuille de recouvrement comprend:
(1) une couche thermoscellable, essentiellement transparente et qui est en contact avec le produit et la feuille arrière sur sa périphérie;
(2) une couche barrière, essentiellement transparente;
(3) une couche décorative d'impression éventuelle;
(4) une couche polymérique extérieure, essentiellement transparente

La présente invention a pour but de définir un film complexe, utilisable en tant qu'opercule de réservoir de produit fluide, par exemple de parfum, qui présente les mêmes avantages esthétiques qu'une étiquette présentant un décor visible. Un autre but est de réaliser un distributeur de produit fluide, tel que du parfum, ayant un décor visible à travers le produit fluide.

Pour ce faire, la présente invention propose un distributeur de produit fluide comprenant un réservoir de produit fluide, une partie du réservoir étant formée par un film complexe servant d'opercule audit réservoir définissant un côté avant et un côté arrière et comprenant plusieurs couches, une couche avant formant le côté avant et une couche arrière formant le côté arrière, la couche avant étant transparente et comprenant un matériau de scellage de sorte que le film complexe est scellable à un autre élément, caractérisé en ce qu'une des couches, autre que la couche avant, est une couche de décor avant visible à travers la couche avant, le produit fluide et le réservoir. La couche avant recouvre ainsi la couche de décor avant de sorte qu'elle ne constitue pas le côté avant du film complexe. En d'autres termes, la couche avant couvre et protège la couche de décor avant. Avantageusement, la couche avant peut être réalisée en PET (polyéthylène téréphtalate). D'autres matériaux peuvent cependant être utilisés, notamment ceux connus pour leurs inerties face à certains produits. Le PET est cependant préféré, car il permet également de réaliser un thermosoudage avec un autre élément, tel que par exemple une coque profilée de réservoir.

Selon l'une des caractéristiques de l'invention, une des couches est une couche barrière.

Avantageusement, la couche barrière est transparente et interposée entre la couche de décor avant et la couche avant, de sorte que la couche de décor avant est visible à travers la couche avant et la couche barrière. De préférence, la couche barrière est en SiOx.

En variante, la couche barrière est en aluminium.

Dans ce cas, la couche barrière est opaque, et la couche de décor avant est alors interposée entre la couche barrière et la couche avant.

Selon une autre caractéristique de l'invention, une des couches est une couche de décor arrière visible depuis le côté arrière. Ainsi, le film complexe est décoré sur ses deux faces de sorte qu'un décor est visible à la fois du côté avant et du côté arrière.

Selon une forme de réalisation de l'invention, la couche de décor avant est une couche d'impression appliquée sur la face arrière de la couche avant. La face avant de la couche avant constitue le côté avant du film complexe.

Grâce à l'invention, on obtient un film complexe à décor double face, avec le décor de la face avant protégé par une couche avant inerte.

Avantageusement, le réservoir est formé par une coque transparente définissant une paroi d'actionnement déformable sur laquelle on peut appuyer pour diminuer le volume utile du réservoir, et un opercule fixé de manière étanche à la coque pour définir entre eux le réservoir, l'opercule étant formé par le film complexe.

De préférence, la coque est en PET transparent, la coque comprenant une partie bombée entourée par une partie périphérique plane, le film complexe servant d'opercule étant thermosoudé à la coque au niveau de la partie plane périphérique. On voit ainsi le décor de l'opercule à travers la coque transparent, le produit fluide transparent ou translucide et la couche avant.

Ainsi, le film complexe de l'invention sert à la fois d'opercule pour compléter un réservoir de produit fluide et d'étiquette double faces parfaitement inertes par rapport au produit fluide stocké dans le réservoir.

En se référant maintenant aux dessins joints donnant à titre d'exemples non limitatifs deux modes de réalisation de l'invention.

Sur les figures :
- la figure 1 est une vue en perspective schématique d'un film complexe selon une première forme de réalisation de l'invention,
- la figure 2 est une vue similaire à celle de la figure 1 pour un second mode de réalisation du film complexe de l'invention,
- la figure 3 est une vue schématique en perspective éclatée d'un distributeur de produit fluide utilisant un film complexe selon l'invention, et
- la figure 4 est une vue en coupe transversale verticale à travers le distributeur de la figure 3.

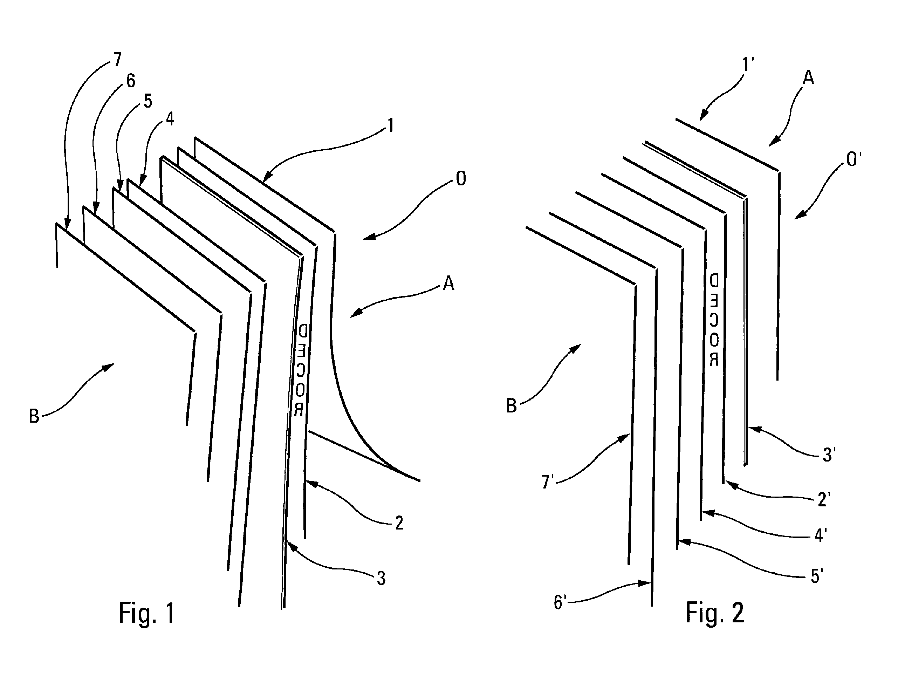

En se référant tout d'abord à la figure 1 qui représente un premier mode de réalisation de l'invention, on voit que le film complexe, désigné dans son ensemble par la lettre O, comprend sept couches successives superposées désignées par les références numériques 1 à 7 en partant du côté avant A et allant jusqu'au côté arrière B. Les différentes couches ont été ici représentées de manière schématique par une feuille plane, mais il faut bien comprendre que certaines couches ne sont pas constituées par une feuille plane, mais seulement par une impression ou un dépôt localisé. Toutefois, pour des raisons de clarté sur les dessins, toutes les couches, mêmes si elles ne sont que très partielles ont été représentées par une feuille plane. D'autres part, les couches ne sont pas forcément planes.

En partant du côté avant A, le film complexe O comprend tout d'abord une couche avant 1 qui peut par exemple être réalisée en PET (polyéthylène téréphtalate), avec une épaisseur de l'ordre de 30 micromètres. Cette couche avant 1 sert de couche externe, et la face avant extérieure définit le côté avant A du film complexe. Cette couche 1 peut également avantageusement servir de couche de fixation, de scellage ou de soudure à un autre élément comme on le verra ci-après. La couche avant 1 est avantageusement transparente ou au moins translucide. La deuxième couche référencée 2 est une couche d'impression ou de décor qui peut être directement appliquée sur la face arrière de la couche avant A. Cette couche de décor avant 2, schématisée sur la figure 1 par une feuille, est en réalité constituée par une impression représentant un décor et/ou des caractères d'imprimerie. On peut même considérer que les couches 1 et 2 ne forment qu'une seule couche avec la face arrière de la couche avant pourvue d'un décor. La troisième couche référencée 3 est une couche barrière qui peut par exemple être réalisée en aluminium avec une épaisseur de l'ordre de 15 micromètres. La couche avant 1 avec sa couche de décor avant 2 est appliquée sur la couche barrière 3 et fixée sur cette couche barrière 3 par n'importe quelle technique connue. On peut par exemple utiliser des techniques de collage ou de soudage. Le film complexe de l'invention peut être uniquement constitué de ces trois couches 1, 2 et 3. La couche de décor 2 est ainsi visible à travers la couche avant 1.

Toutefois, selon l'invention, ce type de film complexe primaire à trois couches peut être pourvu d'un décor arrière qui peut par exemple être constitué de quatre couches successives référencées 4 à 7. La couche 4 est une couche primaire d'accrochage appliquée sur la couche barrière 3. La couche 5 est un aplat sur lequel la couche 6, qui est une couche de texte ou de décor arrière, est appliquée. Enfin, la couche 7, qui est optionnelle, est une couche de protection, par exemple une couche de laque. La face externe de la couche de protection 7 constitue le côté arrière B du film complexe O.

En se référant à la figure 2, on voit une variante de réalisation pour le film complexe, qui est ici désigné par la référence O'. Ce film complexe O' comprend également une couche avant 1' dont la face avant constitue le côté avant A du film complexe. Cette couche avant 1' peut également être réalisée en PET avec une épaisseur de l'ordre de 30 micromètres. La seconde couche en contact de la couche avant l'est une couche barrière 3' qui est ici réalisée en SiOx. Le SiOx peut être directement déposé sur la couche avant 1'. La particularité de cette couche barrière SiOx est qu'elle est transparente. Derrière cette couche barrière 3' on trouve une couche de décor avant 2', qui est ici matérialisée par une feuille mais qui est en réalité simplement une couche d'impression locale. La couche de décor avant 2' peut être identique à la couche de décor avant 2 de la figure 1. Etant donné que la couche barrière en SiOx est transparente, la couche de décor avant 2' est visible à travers la couche barrière. Et comme la couche avant l'est transparente tout comme la couche avant 1 de la figure 1, on peut ainsi voir le décor formé par la couche 2' à travers la couche barrière 3' et la couche avant 1'. La couche de décor avant 2' peut être appliquée sur une couche de support 4'. En pratique, la couche de support ou aplat 4', une fois pourvue de son décor avant 2' est rapporté sur la couche barrière 3' et fixée en place par toutes techniques connues, comme par exemple des techniques de collage ou de soudage. Le film complexe O' pourrait se limiter aux couches 1', 2', 3' et 4'. Toutefois, dans l'exemple représenté sur les figures, le film complexe O' comprend encore 3 autres couches 5', 6' et 7' servant à réaliser un décor visible de la face du côté arrière B. En l'occurrence, la couche de décor arrière 6' appliquée sur sa couche de support 5' qui est fixée sur la couche de support 4'. Optionnellement, une couche de protection 7' est appliquée sur la couche 6'.

Dans les deux formes de réalisation des figures 1 et 2, la couche de décor avant 2 ou 2' ne constitue pas le côté avant A du film complexe. Au contraire, ce côté avant A est réalisé par une couche avant 1 ou 1' qui sert à la fois de couche de protection pour le décor et avantageusement de couche de scellage à un autre élément. Cette couche avant 1 ou 1' est de préférence transparente ou au moins translucide de sorte que le décor formé par la couche de décor avant 2 ou 2' est visible à travers la couche avant 1 ou 1'.

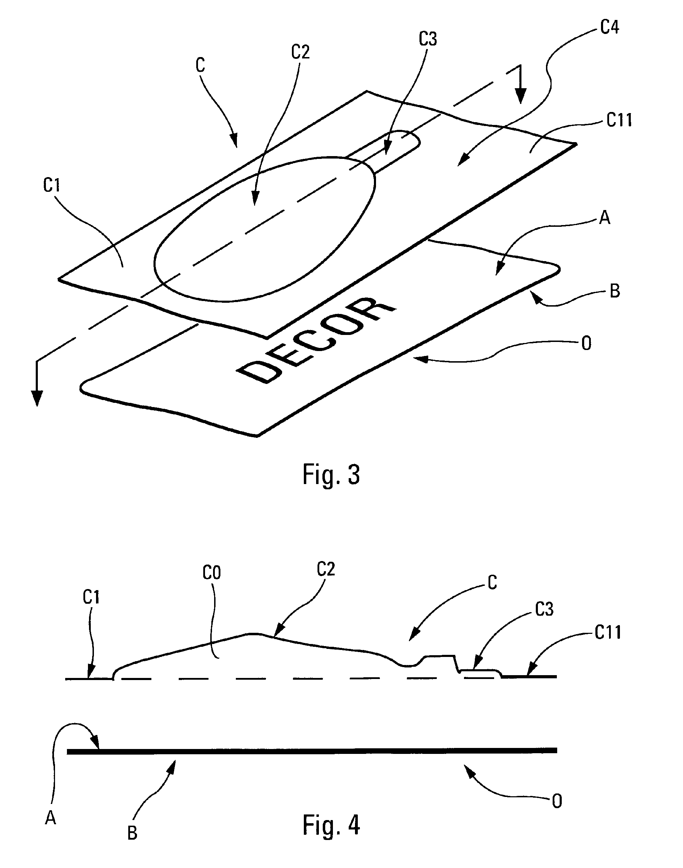

On peut ainsi se servir de ce film complexe O ou O' en tant qu'opercule pour compléter ou former un réservoir contenant un produit, notamment un produit fluide tel que par exemple un parfum. On peut se référer aux figures 3 et 4 qui représentent de manière éclatée un distributeur de produit fluide, et plus particulièrement de parfum. Ce distributeur comprend deux éléments constitutifs, à savoir une coque C et un opercule O. La coque C peut avantageusement être réalisée par une technique de thermoformage de matière plastique. La matière plastique peut être du PET. La coque C comprend une partie bombée C2 qui forme une paroi d'actionnement déformable sur laquelle on peut appuyer à l'aide d'un doigt pour déformer la partie bombée. Cette paroi d'actionnement présente avantageusement une résistance à la déformation et/ou une mémoire élastique de forme qui renvoie la paroi dans sa position d'origine. Cette partie bombée C2 est associée à une partie de sortie C3 qui est également réalisée en relief. Les parties C2 et C3 sont entourées par une partie plane périphérique C1. La partie de sortie C3 est traversée par une ligne de coupure ou de moindre résistance C4 qui délimite une partie de languette arrachable C11 qui fait partie intégrante de la partie périphérique plane C11. L'opercule O peut être réalisé à partir du film complexe O ou O' décrit précédemment. La face avant A est tournée vers la coque C, alors que la face arrière B va constituer le côté arrière du distributeur. L'opercule O est rapporté et thermosoudé à la coque C au niveau de la partie sensiblement plane C1. Le thermosoudage est efficace étant donné qu'il est réalisé entre deux éléments de même nature, à savoir en PET. En effet, la couche avant formant le côté avant A de l'opercule O est une couche en PET alors que la coque C est également réalisée en PET. Le soudage étanche de l'opercule O sur la partie plane C1 de la coque C conduit à réaliser un réservoir de produit fluide C0 délimité entre la partie bombée C2 et l'opercule O. Etant donné que la coque C est transparente, on peut voir le décor formé par la couche de décor avant 2 ou 2', directement à travers le réservoir, et plus particulièrement à travers la coque C du réservoir. On peut ainsi réaliser un décor hors de contact du produit fluide qui permet d'habiller ou de masquer la partie bombée C2 de la coque C, qui ne présente pas toujours une esthétique irréprochable. On peut ainsi se servir de la couche de décor avant de l'opercule pour conférer aux distributeurs une forme qui est autre que celle de la partie bombée C2 de la coque.

Grâce à l'invention, on obtient un film complexe décoré et parfaitement inerte.

## Revendications

1. Distributeur de produit fluide comprenant un réservoir de produit fluide (CO), une partie du réservoir étant formée par un film complexe (O ; O') définissant un côté avant (A) et un côté arrière (B) et comprenant plusieurs couches (1, 2, 3, 4, 5, 6, 7 ; 1', 2', 3', 4', 5', 6', 7'), une couche avant (1 ; 1') formant le côté avant (A) et une couche arrière (7 ; 7') formant le côté arrière (B), la couche avant (1 ; 1') étant transparente et comprenant un matériau de scellage de sorte que le film complexe est scellable à un autre élément, une des couches, autre que la couche avant (1 ;1'), étant une couche de décor avant (2 ; 2') visible à travers la couche avant (1 ; 1'), le produit fluide et le réservoir,
**caractérisé en ce que** le film complexe (O; O') sert d'opercule pour compléter le réservoir de produit fluide (CO).

2. Distributeur selon la revendication 1, dans lequel une des couches est une couche barrière (3 ; 3').

3. Distributeur selon la revendication 2, dans lequel la couche barrière (3') est transparente et interposée entre la couche de décor avant (2') et la couche avant (1'), de sorte que la couche de décor avant est visible à travers la couche avant et la couche barrière.

4. Distributeur selon la revendication 2, dans lequel la couche barrière (3') est en SiOx ou en aluminium.

5. Film complexe selon la revendication 2, dans lequel la couche barrière (3) est en aluminium.

6. Distributeur selon l'une quelconque des revendications précédentes, dans lequel la couche avant (1 ; 1') est en PET.

7. Distributeur selon l'une quelconque des revendications précédentes, dans lequel une des couches est une couche de décor arrière (6 ; 6') visible depuis le côté arrière (B), de sorte que le film complexe (O; O') sert à la fois d'opercule et d'etiquette double faces inerte par rapport au produit fluide stocké dans le réservoir.

8. Distributeur selon la revendication 1 ou 2, dans lequel la couche de décor avant est une couche d'impression appliquée sur la face arrière de la couche avant.

9. Distributeur selon l'une quelconque des revendications précédentes, dans lequel le réservoir est formé par :
- une coque transparente (C) définissant une paroi d'actionnement déformable (C2) sur laquelle on peut appuyer pour diminuer le volume utile du réservoir, et
- un opercule fixé de manière étanche à la coque pour définir entre eux le réservoir, l'opercule étant formé par le fil complexe (O ; O').

10. Distributeur selon la revendication 9, dans lequel la coque (C) est en PET transparent, la coque comprenant une partie bombée (C2) entourée par une partie périphérique plane (C1), le film complexe (O; O') servant d'opercule étant thermosoudé à la coque au niveau de la partie plane périphérique.

## Patentansprüche

1. Fluidproduktspender, aufweisend einen Behälter für ein Fluidprodukt (CO), wobei ein Teil des Behälters aus einer Verbundfolie (0, 0') gebildet ist, die eine Vorderseite (A) und eine Rückseite (B) definiert und mehrere Schichten (1, 2, 3, 4, 5, 6, 7; 1', 2', 3', 4', 5', 6', 7') aufweist, wobei eine Vorderschicht (1; 1') die Vorderseite (A) bildet und eine Rückschicht (7; 7') die Rückseite (B) bildet, wobei die Vorderschicht (1; 1') durchsichtig ist und ein derartiges Siegelmaterial aufweist, dass die Verbundfolie an ein anderes Element gesiegelt werden kann, wobei eine der Schichten, die nicht die Vorderschicht (1; 1') ist, eine vordere Dekorschicht (2; 2') ist, die durch die Vorderschicht (1; 1'), das Fluidprodukt und den Behälter sichtbar ist, **dadurch gekennzeichnet, dass** die Verbundfolie (0; O') als Verschlussorgan dient, um den Fluidproduktbehälter (C0) zu vervollständigen.

2. Spender nach Anspruch 1, wobei eine der Schichten eine Barriereschicht (3; 3') ist.

3. Spender nach Anspruch 2, wobei die Barriereschicht (3') durchsichtig und zwischen der vorderen Dekorschicht (2') und der Vorderschicht (1') zwischengelegt ist, so dass die vordere Dekorschicht durch die Vorderschicht und die Barriereschicht sichtbar ist.

4. Spender nach Anspruch 2, wobei die Barriereschicht (3') aus SiOx oder Aluminium besteht.

5. Verbundfolie nach Anspruch 2, wobei die Barriereschicht (3) aus Aluminium besteht.

6. Spender nach einem der vorhergehenden Ansprüche, wobei die Vorderschicht (1; 1') aus PET besteht.

7. Spender nach einem der vorhergehenden Ansprüche, wobei eine der Schichten eine hintere Dekorschicht (6; 6') ist, die von der Rückseite (B) her sichtbar ist, so dass der Verbundfilm (O; O') gleichzeitig als Verschlussorgan und als doppelseitiges Etikett dient, das gegenüber dem in dem Behälter gelagerten Fluidprodukt träge ist.

8. Spender nach Anspruch 1 oder 2, wobei die vordere Dekorschicht eine Druckschicht ist, die auf der Rückfläche der Vorderschicht aufgebracht ist.

9. Spender nach einem der vorhergehenden Ansprüche, wobei der Behälter gebildet ist durch:
- eine durchsichtige Schale (C), die eine verformbare Betätigungswand (C2) definiert, auf welche man drücken kann, um das Nutzvolumen des Behälters zu verkleinern, und
- ein Verschlussorgan, das dicht an der Schale befestigt ist, um dazwischen den Behälter zu definieren, wobei das Verschlussorgan von der Verbundfolie (0; 0') gebildet ist.

10. Spender nach Anspruch 9, wobei die Schale (C) aus durchsichtigem PET besteht, wobei die Schale einen bauchigen Teil (C2) aufweist, der von einem ebenen Umfangsteil (C1) umgeben ist, wobei die Verbundfolie (O; O') als Verschlussorgan dient, das an dem ebenen Umfangsteil mit der Schale warmverschweißt ist.

## Claims

1. A fluid dispenser comprising a fluid reservoir (CO), a portion of the reservoir being formed by a laminated film (0; O') defining a front face (A) and a rear face (B) and comprising a plurality of layers (1, 2, 3, 4, 5, 6, 7; 1', 2', 3', 4', 5', 6', 7'), a front layer (1; 1') forming the front face (A) and a rear layer (7; 7') forming the rear face (B), the front layer (1; 1') being transparent and comprising a sealing material, such that the laminated film can be sealed to another element, one of the layers, other than the front layer (1; 1'), being a front decorative layer (2; 2') that is visible through the front layer (1; 1'), the fluid, and the reservoir,
the dispenser being **characterized in that** the laminated film (0; O') serves as a closure membrane for completing the fluid reservoir (CO).

2. A dispenser according to claim 1, in which one of the layers is a barrier layer (3; 3').

3. A dispenser according to claim 2, in which the barrier layer (3') is transparent and is interposed between the front decorative layer (2') and the front layer (1'), such that the front decorative layer is visible through the front layer and the barrier layer.

4. A dispenser according to claim 2, in which the barrier layer (3') is made of SiOx or of aluminum.

5. A laminated film according to claim 2, in which the barrier layer (3) is made of aluminum.

6. A dispenser according to any preceding claim, in which the front layer (1; 1') is made of PET.

7. A dispenser according to any preceding claim, in which one of the layers is a rear decorative layer (6; 6') that is visible from the rear face (B), so that the laminated film (0; 0') serves both as a closure membrane and a double-sided label that is inert relative to the fluid stored in the reservoir.

8. A dispenser according to claim 1 or claim 2, in which the front decorative layer is a print layer that is applied to the rear face of the front layer.

9. A dispenser according to any preceding claim, in which the reservoir is formed by:
· a transparent shell (C) that defines a deformable actuator wall (C2) that can be pressed so as to reduce the working volume of the reservoir; and
· a closure membrane that is fastened in leaktight manner to the shell so as to define between them the reservoir, the closure membrane being formed by the laminated film (O; O').

10. A dispenser according to claim 9, in which the shell (C) is made of transparent PET, the shell comprising a portion (C2) that is convex and that is surrounded by a peripheral portion (C1) that is plane, the laminated film (0; O') that serves as a closure membrane being heat-sealed to the shell via the plane peripheral portion.
